# EUROPEAN PATENT APPLICATION

(11) **EP 3 165 064 A1**
(43) Date of publication of application: **10.05.2017**
(21) Application number: 16197311.0
(22) Date of filing: 04.11.2016
(51) Int. Cl.: A01C 11/02, A01C 19/00

(54) **DEVICE FOR PLANTING PLANTS AND SEMIAUTOMATIC TRANSPLANTING MACHINE**

(30) Priority: 06.11.2015 IT UB20155946
(71) Applicant: Spapperi, Aldo, 06010 Città di Castello (PG) (IT)
(72) Inventor: Spapperi, Aldo, 06010 Città di Castello (PG) (IT)
(74) Representative: Romano, Giuseppe

(57) **Abstract**

The present invention relates to a mechanical transmission system applied to a semiautomatic transplanting machine (100) for planting plants, constituted by a worm screw (5) with suitable profile and a plurality of bearings (6) sliding in the profile of the above-mentioned screw (5).

## Description

### Field of application

The present invention is placed in the agriculture field, and in particular it relates to a device which can be installed on a transplanting machine, for planting plants.

### Background of the invention

Traditionally the cultivation of crops providing the transplant and the planting of plants with clods or naked root takes place manually or by using transplanting machines allowing to plant plants in the ground.

The transplanting machines currently on the market normally operate by taking the motion from wheels which, by rolling in contact on the ground, transmit the motion by means of chains and other organs to a series of gears and/or levers which are destined to move the plants until the planting thereof in the ground.

The fundamental portions of a semiautomatic transplanting machine are the conus-carrying rotating drum wherein the plant is inserted and the furrower which has the task of positioning it in the ground.

The rotating drum is positioned horizontally in the machine and thus the axis thereof is perpendicular to the rotation axis of the motion-driving wheels which are in contact to the ground and then in each case in all types of machines there is a bevel gear which transforms the transmission motion from horizontal to vertical.

The furrower, in turn, carries inside an element made of sheet, called ejector, which in synchrony with the rotation of the rotating drum, makes the plant to go out of the furrower and places it in the groove which then will be tamped down by two tamping wheels.

The ejector in turn is moved by other mechanisms, such as for example levers and returns which take the motion from the driving wheels.

Therefore, even if they are quite simple machines, the transplanting machines currently present on the market however require a plurality of mechanical devices affecting quite a lot the economic cost of the machine.

All above-mentioned drawbacks and limitations are overcome with the present invention which relates to a device for planting plants, which can be used on a semiautomatic transplanting machine. Such device is defined in claim N. 1. The present invention further relates to a transplanting machine as defined in claim N. 8.

The present industrial invention, by overcoming the problems of known art, involves several and evident advantages which, together with the features and use modes of the present invention, will result evident from the following detailed description of preferred embodiments thereof, shown by way of example and not for limitative purpose.

### Brief description of the drawings

The figures of the enclosed drawings will be referred to, wherein:

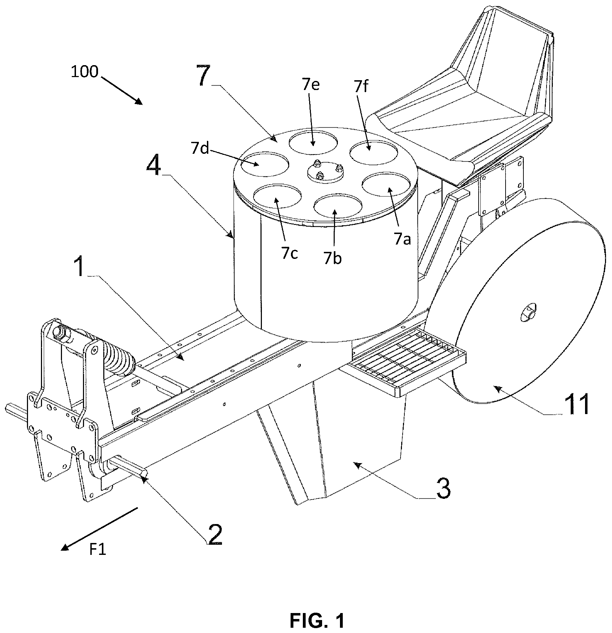

- figure 1 is an overall view of a transplanting machine according to the present invention, which uses a device thereto present invention relates;

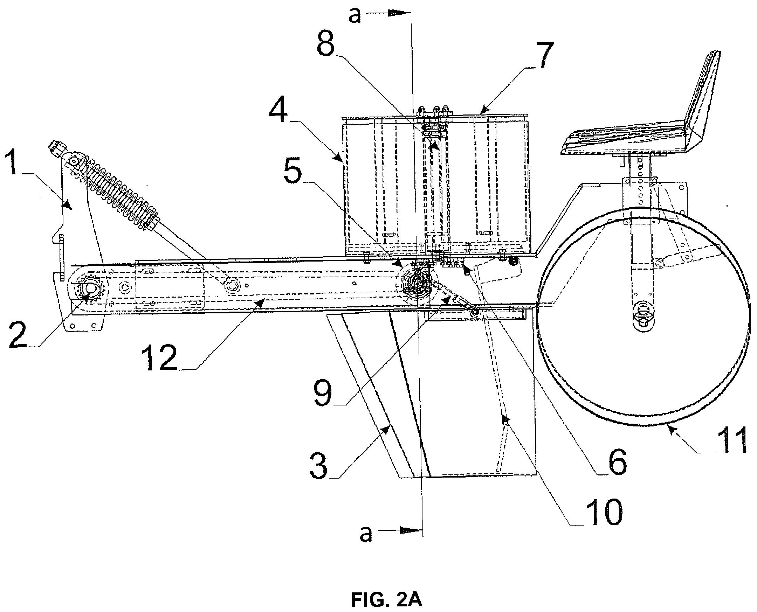

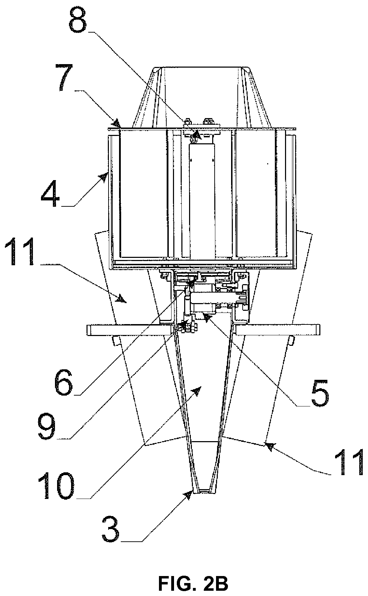

- figures 2A and 2B are a transparent side view and a section taken along the line a-a of figure 2A of a transplanting machine according to the present invention, respectively;
- figures 3A and 3B are a side view and a plan view of a transplanting machine according to the present invention in a working configuration, respectively; and

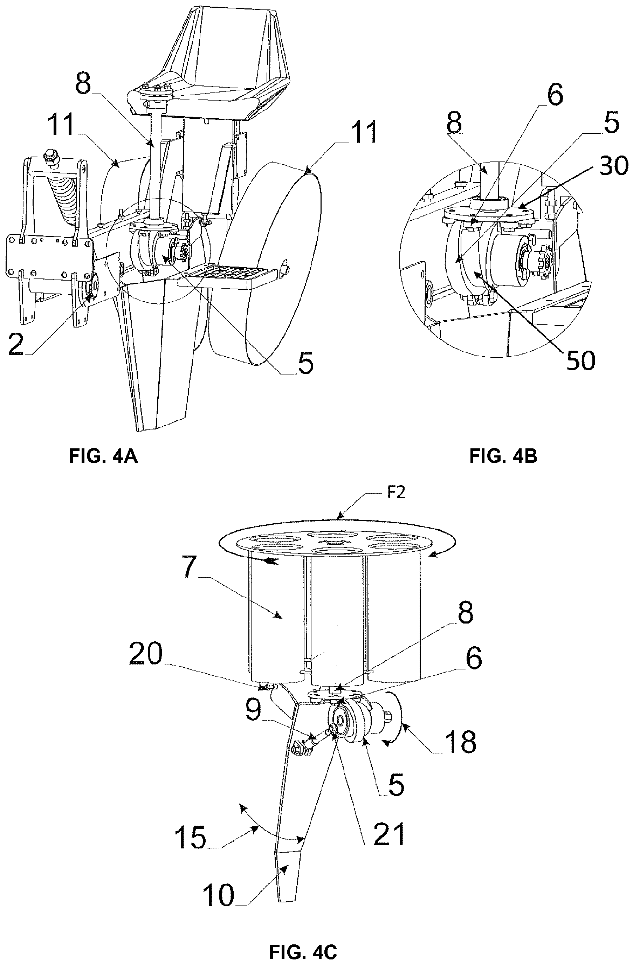

- figures 4A, 4B and 4C are views showing the device and/or the machine according to the present invention, respectively.

The present invention will be described hereinafter by referring to the above-mentioned figures.

### Detailed description of the invention

By making reference to the figures, the running direction of a machine 100 according the invention, and thus the forwarding direction onto the ground, is designated with F1.

In particular a machine 100 according to the present invention comprises a bearing frame 1, suitable to support all organs of a device for planting plants. The device for planting plants first of all comprises a distributing drum 7, rotating towards the direction F2, having a predetermined number N of seats 7a-7f for containing the plants to be transplanted.

The distributing drum 7 is assembled on a revolving pin 8 with substantially vertical axis with respect to the ground.

Such pin 8 comprises a base flange 30 bearing a plurality of bearings 6, for example ball or roller bearings, assembled along a periphery with centre on the axis of the pin 8 and with axis parallel to the pin 8 itself.

Advantageously, the bearings 6 are in number equal to the number N of the seats 7a-7f of the rotating drum 7.

The device further comprises a worm screw 5, assembled with substantially horizontal axis with respect to the ground and offset with respect to the vertical axis of the pin 8 by a quantity equal to the distance between the centre of the pin 8 and the axis of the bearings 6.

It is to be meant that the worm screw 5 has a thread 50 with sizes suitable to house one of said bearings 6 and to allow that it rolls inside thereof.

The number N of bearings 6 has to be equal to the number of seats present in the distributing drum 7. The pitch of the screw 5 and the width of the thread 50 on the screw are so that during a complete turn of the screw 5 only one bearing engages the thread 50.

To this purpose, the device comprises a mechanism for driving the worm screw 5, in order to put it in rotation so that the rotation of the worm screw 5 drags in sequence the bearings 6 and brings in synchronous rotation the pin 8 and the distributing drum 7.

Then, with this system the rotary motion with horizontal axis of the screw 5 has transformed into rotary motion with vertical axis of the pin 8.

The mechanism for driving the worm screw 5 comprises a primary transmission shaft 2 and a mechanism for transmitting the motion from said primary transmission shaft 2 to said worm screw 5, for example the mechanism for transmitting the motion can be of the chain type 12, toothed wheels and pinions. The primary transmission shaft 2 can take the motion from a possible wheel resting onto the ground, but evidently it is to be meant that the primary transmission shaft 2 can be put into rotation in another way, for example connected to a power take-off of a tractor.

It is further to be meant that the worm screw could even be moved by a mechanism of different type, a hydraulic, electromechanical one or other.

The device according to the invention further comprises a hollow furrower 3 having - on the rear side with respect to the forwarding direction F1 - an ejecting opening 40.

The furrower 3 is apt to receive a plant released by the distributing drum 7 and it houses an ejecting element 10 which can move between a position for receiving a plant from the distributing drum 7 and a position for ejecting said plant through the ejecting opening 40.

The ejector 10 comprises an element made of sheet hinged at an edge thereof and it is preferably actuated by means of a connecting rod 9 revolvingly connected between the ejector 10 and the periphery of the worm screw 5, so that, by rotating the worm screw 5, the connecting rod 9 determines a swivelling motion of the element made of sheet, synchronous with respect to the rotation of the distributing drum 7.

Furthermore, the device according to the invention comprises a pair of tamping wheels 11, assembled so as to have a tilted axis with respect to the ground, so as to tamp down the ground around the plant ejected by the furrower 3.

The operation of the device can be described as follows.

When the machine 100, hooked to a suitable tractor, is moved according to the arrow F1 showing the forwarding direction on the ground, the primary transmission shaft 2 will start rotating (for example as connected to a wheel which touches the ground, not shown in the figures as irrelevant to the purpose of the present invention) and, by means of the chain 12 and related pinions, transmits the motion to the worm screw 5.

The rotation of the worm screw 5 is exploited even to give motion to the ejector 10 which is inside the furrower 3. The ejector has the fulcrum 20 as rotation point. A connecting rod 9 connects the ejector 10 to the worm screw 5, and at each turn of the latter there is a complete stroke of the ejector which pushes a plant 17 (which in the meantime has fallen inside the furrower 3) outside the furrower. All this takes place clearly in phase with the motion of the distributing drum 7.

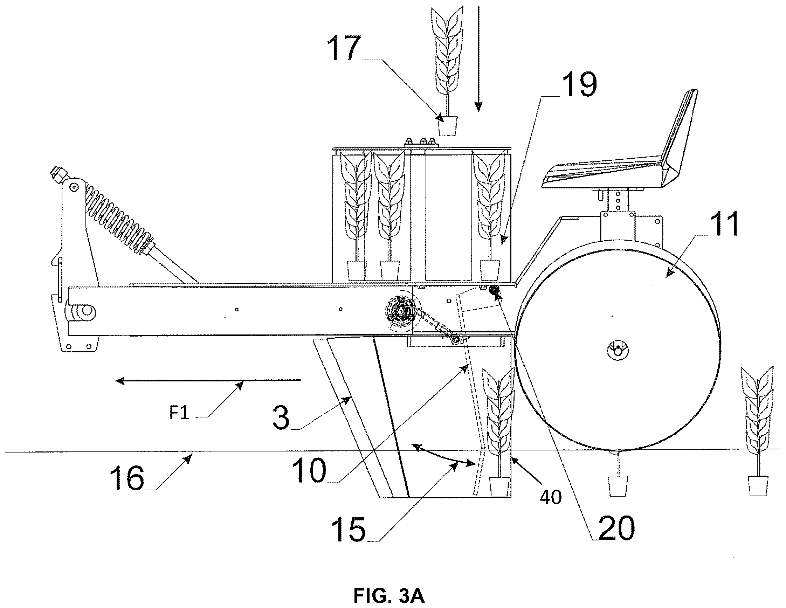

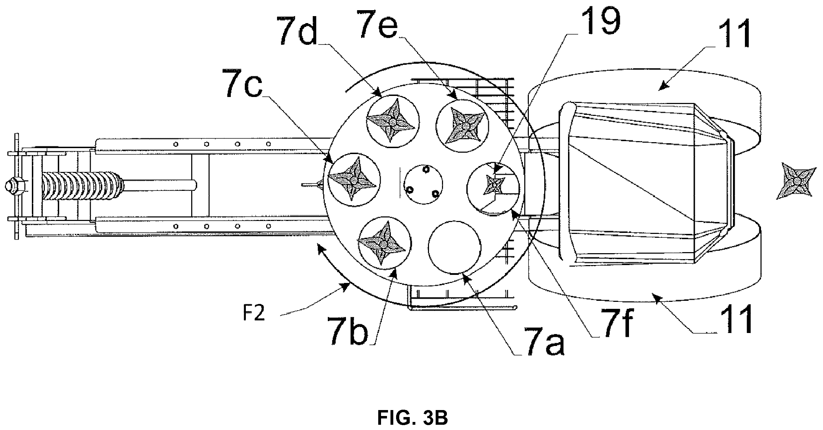

Figures 3A and 3B show two views for better understanding the path that the plant follows before being planted.

An operator can load the distributing drum 7 in all seats from 7a as far as 7e, by leaving free the seat 7f which corresponds to an opening on the bottom of the cylinder 4 which is in communication with the underneath furrower 3.

The cylinder 4 is clearly fixed whereas the distributing drum 7 is made to rotate by the worm screw 5, then the plants which are inserted inside the housings (cylinder or conical housings crawling onto the bottom of the cylinder (4)) which are connected to the holes of the drum 7, are brought into rotation, and when they reach the point 19 wherein the bottom of the cylinder 4 has an opening, they fall by gravity inside the furrower 3.

At this point the ejector 10 which, as we have seen, shifts in phase with the remaining portion of the system, by shifting towards the rear portion of the machine (with respect to the forwarding direction) causes the ejection of the plant 17 from the furrower, and as it is positioned under the ground level, the plant which is just outside will be already wound by the earth. At this point the two tamping wheels 11 will complete the procedure by tamping down the earth around the plant so as to ease the rooting thereof.

The device according to one of the embodiments described up to now of course can be installed on any transplanting machine both carried, drawn or self-propelled one, in particular a machine suitable for the forwarding along a running direction.

The present industrial invention has been sofar described by referring to preferred embodiments thereof. It is to be meant that each one of the technical solutions implemented in the preferred embodiments herein described by way of example, could be advantageously combined differently therebetween, in order to create other embodiments, belonging to the same use core and however all within the protective scope of the here below reported claims.

## Claims

1. A device for planting plants, usable on a semiautomatic transplanting machine (100), comprising:
- a rotating distributing drum (7) having a predetermined number (N) of seats (7a, 7b, 7c, 7d, 7e, 7f) for the containment of said plants, assembled on a revolving pin (8) with axis substantially vertical with respect to the ground; said pin (8) comprising a base flange (30) carrying a plurality of bearings (6) with axis parallel to said pin (8) and assembled along a periphery with centre onto the axis of the pin (8), said bearings being in number equal to the number (N) of seats (7a, 7b, 7c, 7d, 7e, 7f) of the rotating drum (7);
- a worm screw (5) assembled with substantially horizontal axis with respect to the ground and offset with respect to the vertical axis of the pin (8) by a quantity equal to the distance going from the centre of the pin (8) to the axis of the bearings (6); said worm screw (5) having a thread (50) with sizes suitable to house one of said bearings (6) and to allow that it rolls inside thereof;
- a mechanism for driving said worm screw (5), the rotation of said worm screw (5) dragging in sequence said bearings (6) and bringing in synchronous rotation said pin (8) and said distributing drum (7).

2. The device according to claim 1, comprising a hollow furrower (3), having an ejection opening (40) on the rear side with respect to the forward direction (F1), wherein said furrower (3) is apt to receive a plant released by the distributing drum (7) and it houses an ejecting element (10), said ejecting element (10) being able to move between a position for receiving a plant from said distributing drum (7) and a position for ejecting said plant through said ejecting opening (40).

3. The device according to claim 2, wherein said ejector (10) comprises an element made of sheet hinged at an edge thereof and it is actuated by means of a connecting rod (9) revolvingly connected between the ejector (10) and the periphery of said worm screw (5), so that, by rotating the worm screw (5), said connecting rod (9) determines a swivelling motion of said element made of sheet, synchronous with respect to the rotation of the distributing drum (7).

4. The device according to one of the previous claims, wherein said mechanism for driving the worm screw (5) comprises a primary transmission shaft (2) and a mechanism for transmitting the motion from said primary transmission shaft (2) to said worm screw (5).

5. The device according to claim 4, wherein said mechanism for transmitting the motion is of the type with chain (12) and toothed wheels.

6. The device according to one of the previous claims, comprising a pair of tamping wheels (11).

7. The device according to claim 4, wherein said tamping wheels (11) have a tilted axis with respect to the ground, so as to tamp down the ground around the plant ejected by the furrower (3).

8. A semiautomatic transplanting machine, comprising a device for planting plants according to anyone of claims 1 to 7.

9. The semiautomatic transplanting machine according to the previous claim, comprising a free wheel arranged so as to rotate in contact with the ground, such rotation being transferred to said primary transmission shaft (2).
